# EUROPÄISCHE PATENTSCHRIFT

(11) **EP 1 955 806 B1**
(45) Veröffentlichungstag und Bekanntmachung des Hinweises auf die Patenterteilung: **08.04.2009**
(21) Anmeldenummer: 08156937.8
(22) Anmeldetag: 22.02.2006
(51) Int. Cl.: B23Q 1/00, H01F 38/18

(54) **Drehkopfübertrager**
Rotational transmitter
Système de transmission de rotation

(30) Priorität: 09.03.2005 DE 102005011197
(43) Veröffentlichungstag der Anmeldung: 13.08.2008
(62) Teilanmeldung aus: 06707153.0
(73) Patentinhaber: KOMET GROUP Holding GmbH, 74354 Besigheim (DE)
(72) Erfinder: Hörl, Roland, 74357 Bönnigheim (DE); Graf, Heiko, 70839 Gerlingen (DE)
(74) Vertreter: Wolf, Eckhard

(56) Entgegenhaltungen:
- EP-B- 0 719 199
- DE-A1- 10 200 488
- DE-A1- 19 538 528

## Beschreibung

Die Erfindung betrifft einen Drehübertrager mit einem Statorteil und einem Rotorteil, mit je einer statorseitigen und einer rotorseitigen, an einander zugewandten Enden über einen Luftspalt voneinander getrennten Kernpartie, mit je mindestens einer auf die statorseitige und die rotorseitige Kempartie aufgewickelten Energiewicklung für die Energieübertragung nach dem Transformatorprinzip, und mit einander paarweise zugeordneten, stator- und rotorseitigen Kopplungswindungen für die induktive Datenübertragung, die an eine Sende- und/oder Empfangselektronik angeschlossen sind.

Drehübertrager dieser Art werden beispielsweise in Verstell-Werkzeugen mit externer Energieversorgung eingesetzt (EP 719 199 B1, DE 102 00 488 A1).

Bei den bekannten Drehübertragem sind flächig ausgebildete Kopplungswindungen vorgesehen, die wechselweise an die Sende- und Empfangselektronik anschließbar sind und die zur kontaktlosen Übertragung von Wechselsignalen im unmittelbaren Bereich der Primärwicklung und der Sekundärwicklung des Transformators beispielsweise im Wickelfenster oder im Bereich der Schenkelenden der Kernpartien angeordnet sind. Beim Einsatz in Werkzeugmaschinen sind die mindestens eine Kopplungswindung und die Energiewicklung des Stators unmittelbar dem Kühlmittel- und Spänestrom und daher einem hohen Verschleiß ausgesetzt, der eine häufige zeit- und materialaufwändige Wartung erfordert. Dies gilt vor allem beim Einsatz von Werkzeugen herkömmlicher Bauart, die kein den Stator übergreifendes Rotorteil aufweisen und der Stator dadurch dem Materialstrom ausgesetzt ist.

Ausgehend hiervon liegt der Erfindung die Aufgabe zugrunde, einen Drehübertrager zu entwickeln, der vor einem unnötigen Verschleiß geschützt ist und einen relativ geringen Wartungsaufwand erfordert.

Zur Lösung dieser Aufgabe werden die in den Ansprüchen 1 und 4 angegebenen Merkmale vorgeschlagen. Vorteilhafte Ausgestaltungen und Weiterbildungen der Erfindung ergeben sich aus den abhängigen Ansprüchen.

Gemäß einer ersten Lösungsalternative der Erfindung ist das Statorteil in einem Gehäuse angeordnet, das aus einem Grundgehäuse zur Aufnahme einer Sende- und Empfangselektronik mit Anschlusskabel sowie einem am Grundgehäuse lösbar angeordneten Wechselgehäuse zur Aufnahme der Energiewicklung und der mindestens einen Kopplungswindung zusammengesetzt ist, wobei zwischen dem Grundgehäuse und dem Wechselgehäuse lösbare Steckkontakte zur Herstellung von elektrischen Verbindungen angeordnet sind. Eine vorteilhafte oder alternative Ausgestaltung der Erfindung sieht vor, dass das Statorteil in einem Gehäuse angeordnet ist, das im Bereich der Energiewicklung und der mindestens einen Kopplungswindung zur Rotorseite hin unter Bildung eines Gehäusefensters offen ist. Dabei ist das Gehäusefenster zweckmäßig mit einem Deckel verschließbar, der vorzugsweise über ein Handhabungssystem am Gehäuse platziert und fixiert werden kann.

Während bei der ersten Alternative das Wechselgehäuse bei Nichtgebrauch mit wenigen Handgriffen vollständig entfernt werden kann, bleibt das Statorgehäuse bei der zweiten Lösungsalternative auch bei Nichtgebrauch in seiner Position und wird lediglich durch einen Deckel gegen Verschleiß geschützt.

Zum Schutz der Kopplungswindungen und der Energiewicklungen sind zumindest die rotornahen Windungszweige der statorseitigen Kopplungswindungen und/oder Energiewicklung mit einer dielektrischen Deckschicht versehen. Die Deckschicht kann dabei mit einer Kennfarbe eingefärbt sein, damit ein Verschleiß von außen an einer Farbänderung erkannt werden kann. Zweckmäßig weist die Deckschicht eine Wandstärke < 1 mm, vorzugsweise < 0,5 mm, auf. Wenn zusätzlich eine Vorrichtung zur Messung der elektrischen Leitfähigkeit der Deckschicht vorhanden ist, kann diese Anordnung zur automatischen Überwachung des Verschleißzustandes benutzt werden. Vorteilhafterweise sind die Kopplungswindungen und/oder die Energiewicklung in eine zugleich die Deckschicht bildende Gießmasse eingebettet. Die Gießmasse und/oder die Deckschicht enthält dabei zweckmäßig ein abriebfestes Material, das beispielsweise aus beigemischten Keramikteilchen bestehen kann.

Um einen Zugriff zu dem Rotor mit einem automatischen Handhabungssystem zu ermöglichen, ist es von Vorteil, wenn das Statorteil mit seiner Kernpartie, der Energiewicklung und der mindestens einen Kopplungswindung sich nur über ein Zylindersegment erstreckt, während das Rotorteil mit seiner Kernpartie, der Energiewicklung und der mindestens einen Kopplungswindung sich über einen Vollzylinder erstrecken kann.

Die Erfindung betrifft außerdem eine Werkzeugmaschine mit einem Maschinengestell, einer motorisch antreibbaren Maschinenspindel und einem an der Maschinenspindel lösbar angeordneten Werkzeugkopf, wobei das Maschinengestell in Spindelnähe das Statorteil und der Werkzeugkopf das Rotorteil des erfindungsgemäßen Drehübertragers trägt. Eine weitere verschleißmindernde Maßnahme besteht darin, dass die rotorseitige Oberfläche des Statorteils von einem spanabweisenden Fluidstrom beaufschlagt ist.

Weiter ist es von Vorteil, wenn eine Handhabungsvorrichtung zum Montieren oder Abnehmen zumindest eines Teils des Statorteils am/vom Maschinengestell vorgesehen ist. Eine Werkzeugmaschine mit automatischem Werkzeugwechsel umfasst außerdem ein Werkzeugmagazin, wobei gemäß der Erfindung das Werkzeugmagazin mindestens einen Platz für die Aufnahme des vom Maschinengestell abgenommenen Teils des Statorteils aufweist.

Im Folgenden wird die Erfindung anhand der in der Zeichnung in schematischer Weise dargestellten Ausführungsbeispiele näher erläutert. Es zeigen
- Fig. 1: eine Seitenansicht eines in eine Maschinenspindel eingespannten Werkzeugkopfs mit induktivem Drehübertrager für die Energie-und Datenübertragung in teilweise geschnittener Darstellung;
- Fig. 2a und 2b: eine Seitenansicht und eine Draufsicht eines an einen Spindelkasten einer Werkzeugmaschine montierten Statorteils des Drehübertragers nach Fig. 1 mit Wechselgehäuse;
- Fig. 3a bis 3d: eine Draufsicht und drei verschiedenen Schnittdarstellungen des Stators nach Fig. 2a und 2b;
- Fig. 4a und 4b: eine Darstellung entsprechend Fig. 2a und 2b mit auf die Statoröffnung aufgesetzter Deckelplatte;
- Fig. 4c und 4d: Darstellungen entsprechend Fig. 4a und 4b mit einem die Deckelplatte tragenden Deckelhalter;

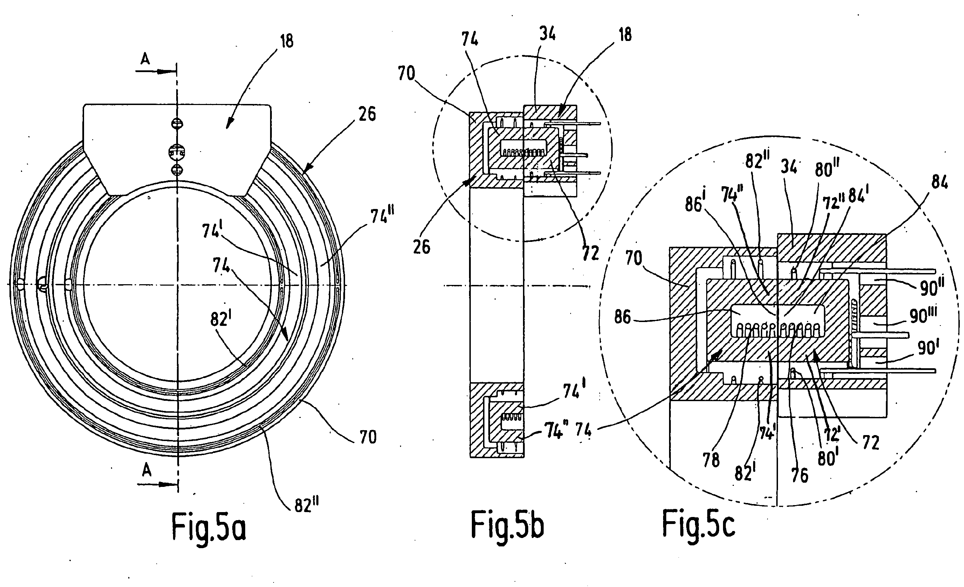

- Fig. 5a: eine Draufsicht auf den Drehübertrager von der Statorseite aus gesehen;
- Fig. 5b und 5c: einen Schnitt entlang der Schnittlinie A-A der Fig. 5a sowie einen vergrößerten Ausschnitt aus Fig. 5b;

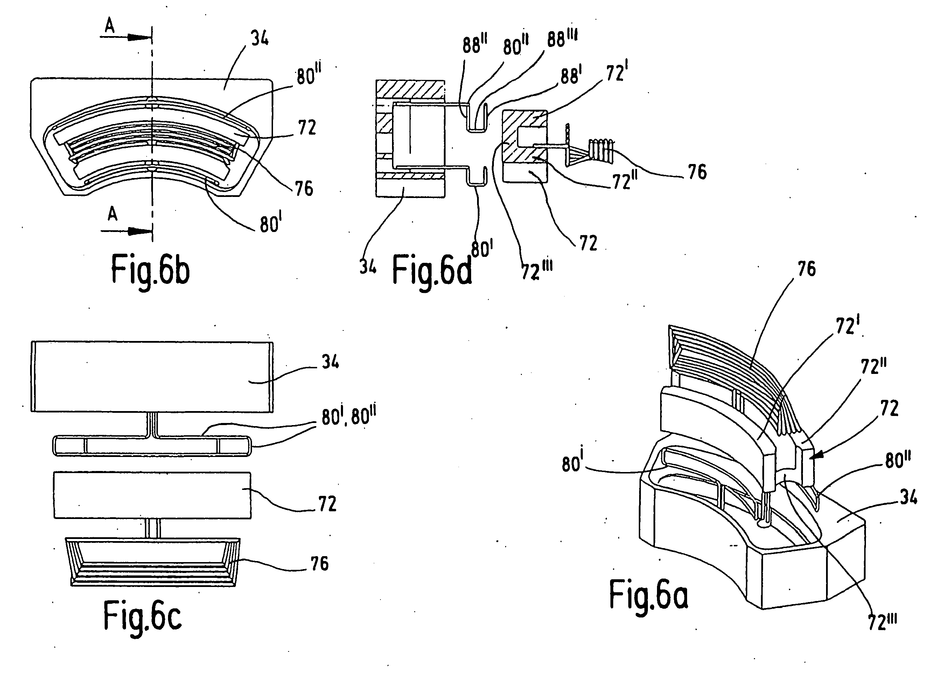

- Fig. 6a: eine schaubildliche Explosionsdarstellung des Statorteils des Drehübertragers;
- Fig. 6b: bis 6d zwei Seitenansichten und eine Schnittdarstellung des Statorteils nach Fig. 6a;

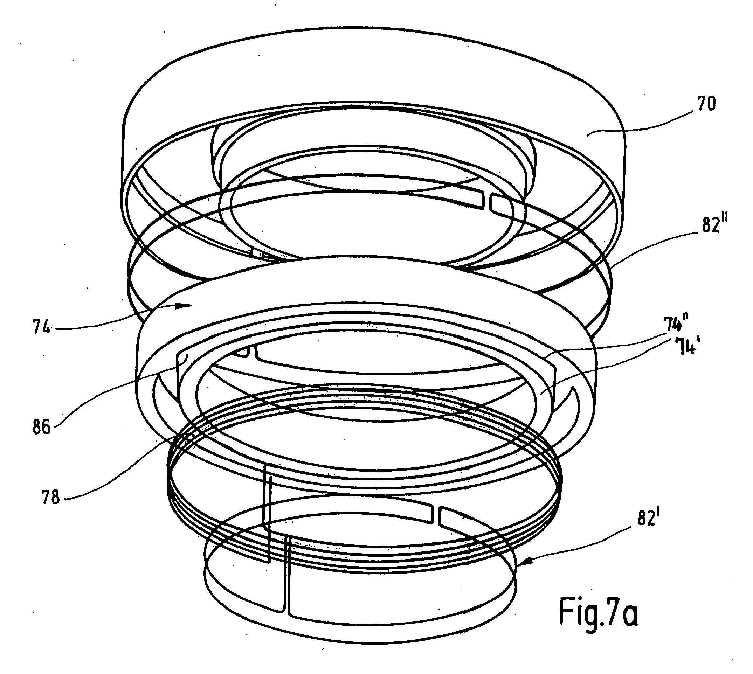

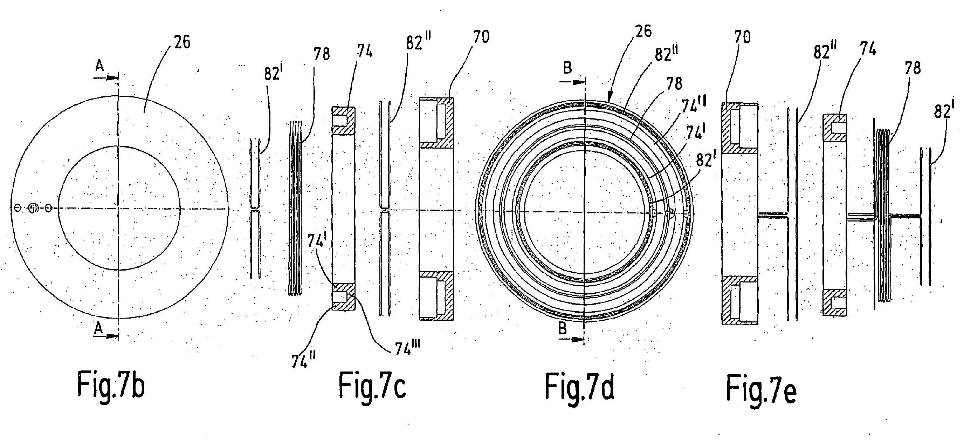

- Fig. 7a: eine schaubildliche Explosionsdarstellung des Rotorteils des Drehübertragers;
- Fig. 7b: und 7c eine Draufsicht auf die geschlossene Seite des Rotorteils sowie einen Schnitt entlang der Schnittlinie A-A der Fig. 7b;
- Fig. 7d und 7e: eine Draufsicht auf die offene Seite des Rotorteils sowie einen Schnitt entlang der Schnittlinie B-B der Fig. 7d;
- Fig. 8: eine schaubildliche Darstellung der statorseitigen und rotorseitigen Kopplungsschleifen des Drehübertragers.

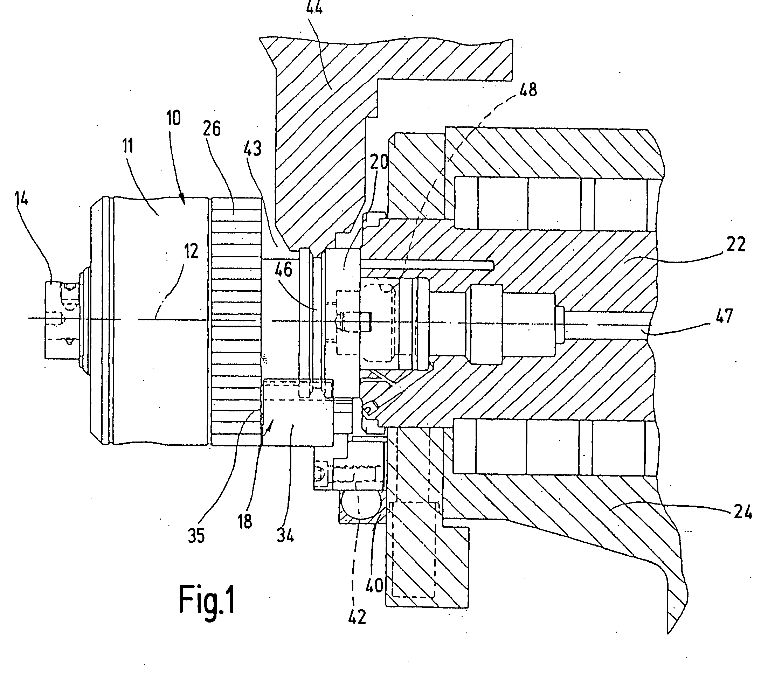

Der in Fig. 1 dargestellte, als Feindrehkopf ausgebildete Werkzeugkopf 10 besteht im wesentlichen aus einem Grundkörper 11, einem quer zur Drehachse 12 des Werkzeugkopfs 10 gegenüber dem Grundkörper 11 verstellbaren, eine Werkzeugaufnahme für einen ein Schneidwerkzeug tragenden Schieber 14, mindestens einem innerhalb des Werkzeugkopfs 10 angeordneten Stromverbraucher in Form einer Messeinrichtung zur direkten Verstellwegmessung sowie einem elektrischen Verstellmotor für den Schieber 14. Die Stromversorgung der Stromverbraucher und der Datenaustausch erfolgt über einen Drehübertrager, der aus einem Statorteil 18 und einem Rotorteil 26 besteht. Der Werkzeugkopf 10 ist mit einem axial über den Grundkörper 11 überstehenden Werkzeugschaft 20 mit der Maschinenspindel 22 und der Werkzeugmaschine 24 kuppelbar. Zur Einstellung eines Luftspalts 35 zwischen dem Stator- und dem Rotorteil ist das Statorgehäuse 34 an einem statorfesten Halter 40 mittels eines Verstellmechanismus 42 sowohl in seinem Abstand zum Rotor als auch in seiner Drehlage um eine zur Drehachse 12 parallele Achse verstellbar angeordnet.

Bei dem in Fig. 1 gezeigten Ausführungsbeispiel erstreckt sich das Statorteil 18 segmentartig nur über einen Teilumfang von etwa 70° des Werkzeugschafts 20 und lässt den überwiegenden Teil des Schaftumfangs unter Bildung eines Freiraums 43 für den Zugriff eines Werkzeuggreifers 44 für den automatischen Werkzeugwechsel frei. Beim Werkzeugwechsel wird der Werkzeugkopf 10 an der Greiferrille 46 vom Werkzeuggreifer 44 von der dem Statorteil gegenüberliegenden Seite her erfasst und bei gelöster Werkzeugkupplung axial gegenüber der Maschinenspindel 22 verschoben. Die Kupplung des Werkzeugkopfes 10 mit der Maschinenspindel 22 erfolgt über einen maschinenseitig über die Zugstange 47 betätigbaren Spannmechanismus, der von der Maschinenseite aus in den Hohlraum 48 des Werkzeugschafts 20 eingreift und den Werkzeugkopf unter Herstellung einer Planflächenverspannung und einer Radialverspannung mit der Maschinenspindel 22 kuppelt.

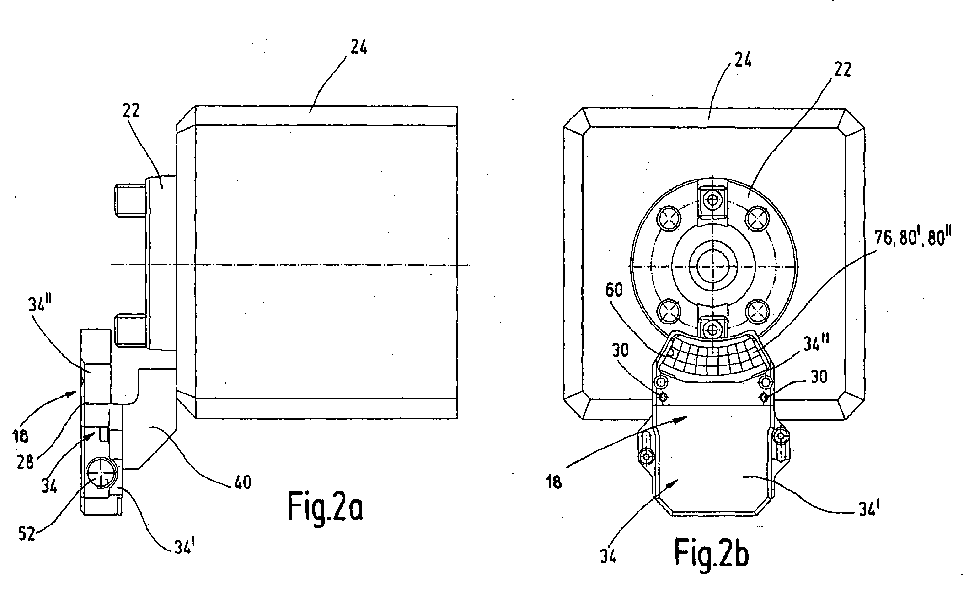

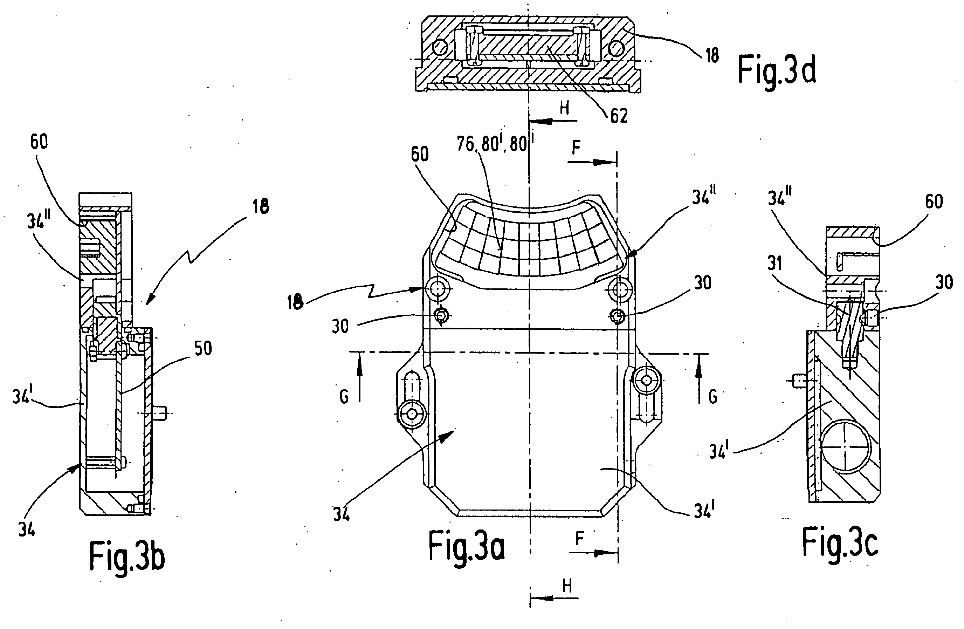

Bei dem in den Figuren 2a bis 4d gezeigten Ausführungsbeispiel weist das Statorteil 18 ein zweiteiliges Gehäuse 34, bestehend aus einem Grundgehäuse 34' und einem Wechselgehäuse 34", auf. Das Grundgehäuse 34' ist an dem statorfesten Halter 40 fixiert, während das Wechselgehäuse 34" an der Trennstelle 28 mittels zweier Spannschrauben 30 und einem Verbindungsbolzen 31 lösbar am Grundgehäuse 34' befestigt ist. Im Grundgehäuse 34' sind die Signalaufbereitungselektronik, die Sende- und Empfangselektronik sowie die Elektrik für die Energieversorgung auf einer Platine 50 angeordnet, die ein durch eine Öffnung 52 im Grundgehäuse 34' hindurchgreifendes Kabel mit der Maschinensteuerung verbunden ist. Im Wechselgehäuse 34" befinden sich eine Energiewicklung 76 für die Energieübertragung sowie zwei Kopplungswindungen 80',80" für die induktive Datenübertragung zum Rotorteil 26. Die Energiewicklung und die Kopplungswindungen sind in eine Gießmasse aus Kunstharz mit abriebfestem Zusatz, wie z. B. Keramikteilchen, eingebettet und befinden sich im Wechselgehäuse 34" hinter einem Gehäusefenster 60. Die Energiewicklung 76 und die Kopplungswindungen 80',80" sind über eine als Steckverbindung ausgebildete elektrische Trennstelle 62 mit der Signalaufbereitungselektronik auf der Platine 50 lösbar verbunden.

Die Energiewicklung 76 und die Kopplungswindungen 80',80" sind über das Gehäusefenster 60 einem Materialstrom bestehend aus Spänen und/oder Kühlmittel, ausgesetzt und unterliegen daher einem Verschleiß. Dies gilt vor allem beim Einsatz von Werkzeugen herkömmlicher Bauart, die kein das Statorteil 18 übergreifendes Rotorteil 26 aufweisen. Um die Statorwicklungen vor unnötigem Abrieb zu schützen, kann das Wechselgehäuse 34" durch Lösen der beiden Schrauben 30 mit einfachen Handgriffen entfernt werden, ohne dass das Grundgehäuse 34' abgenommen werden muß.

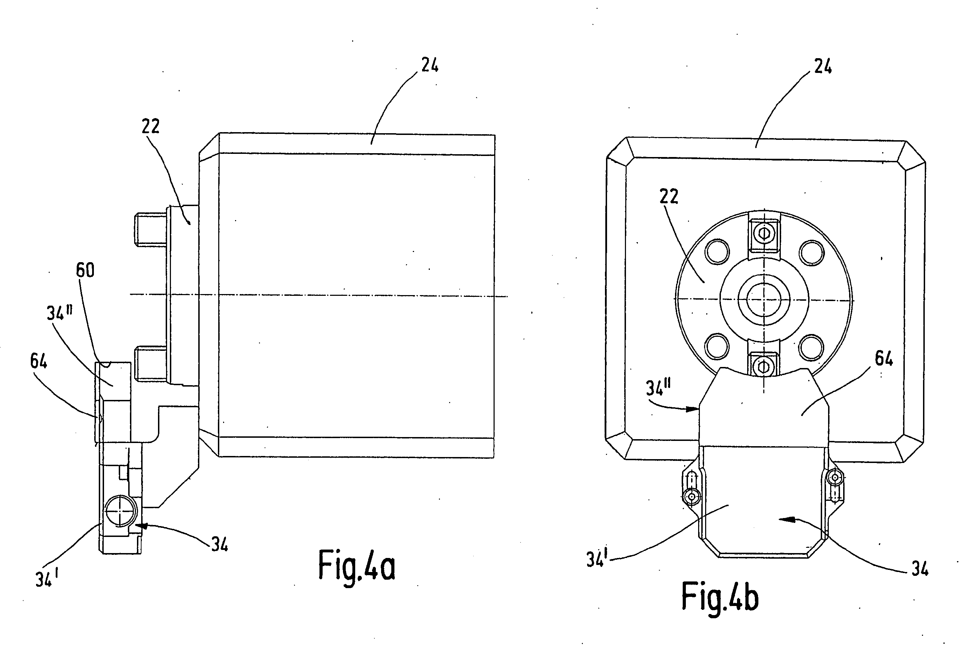

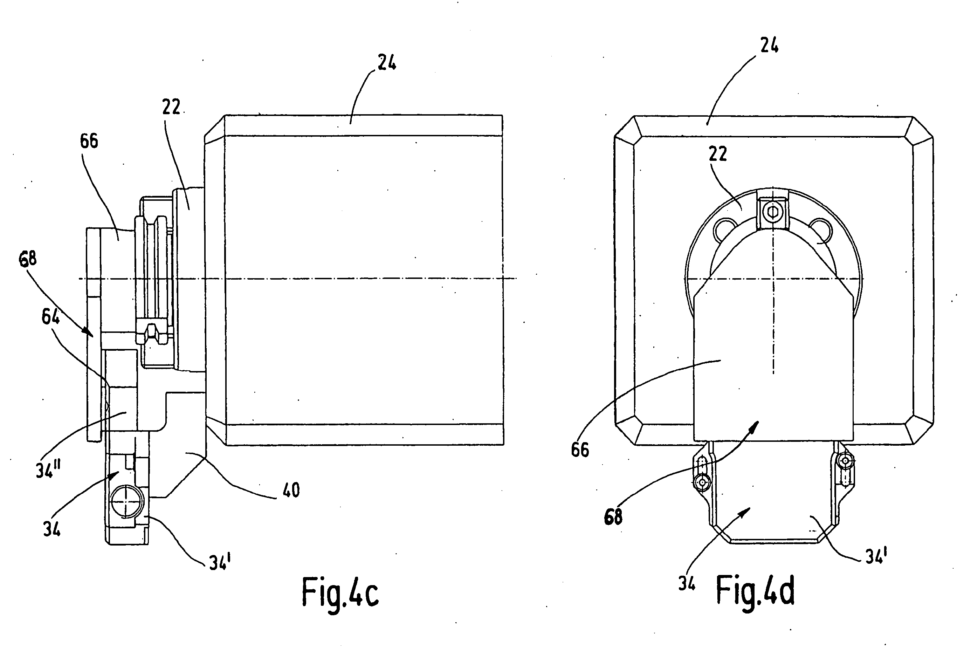

Eine weitere Möglichkeit für den Verschleißschutz besteht darin, dass das Gehäusefenster 60 bei Nichtgebrauch durch einen Deckel 64 verschlossen wird. Das Anbringen und Abnehmen des Deckels 64 kann mit Hilfe eines Werkzeugwechslers 66 erfolgen, der mit einem Deckelhalter 68 bestückt ist (Fig. 4c und 4d). Der Vorgang des Aufsetzens und Abnehmens des Deckels 64 kann somit automatisiert werden.

Das Statorteil 18 und das Rotorteil 26 weisen jeweils eine im Querschnitt U-förmige Kernpartie 72,74 sowie je eine auf die statorseitige und die rotorseitige Kernpartie aufgewickelte Energiewicklung 76,78 für die Energieübertragung nach dem Transformatorprinzip auf. Außerdem sind je zwei einander paarweise zugeordnete stator- und rotorseitige Kopplungswindungen 80',80",82', 82" vorgesehen, die an die Sende und/oder Empfangselektronik in dem betreffenden Bauteil angeschlossen sind. Im montierten Zustand sind die Kernpartien 72,74 mit ihren freien Schenkeln 72',72",74',74" einander unmittelbar zugewandt und durch den Luftspalt 35 voneinander getrennt. Die Energiewicklungen 76,78 greifen in den Wickelraum 84,86 zwischen den beiden Kernschenkeln und dem Joch 72"',74"' ein und sind im Bereich des Wickelfensters 84',86' durch den Luftspalt 35 voneinander getrennt. Eine Besonderheit der Erfindung besteht darin, dass sich die Kopplungswindungen 80',80" im Statorteil 18 und die Kopplungswindungen 82',82" im Rotorteil 26 auf der Außenseite je eines der beiden Kernschenkel befinden. Die statorseitigen Kopplungswindungen 80',80" weisen dabei einen rotornahen Windungszweig 88' und einen rotorfernen Windungszweig 88" auf, die über Umlenkschleifen 88''' miteinander verbunden sind. An ihren rotorfernen Windungszweigen 88" sind die statorseitigen Kopplungswindungen 80',80" durch Öffnungen 90', 90" durch das Statorgehäuse 34 nach außen geführt. Die Energiewicklung 76 ist über eine weitere Öffnung 90'" durch das Statorgehäuse 34 nach außen geführt.

Die rotorseitige Energiewicklung 78 liegt im Wickelraum 86 der rotorseitigen Kernpartie 74 unmittelbar der statorseitigen Energiewicklung 76 gegenüber.
Die rotorseitigen Kopplungswindungen 82',82" liegen mit ihrem statornahen Windungszweig 89' dem rotornahen Windungszweig 88' der korrespondierenden statorseitigen Kopplungswindungen 80', 80" unmittelbar gegenüber. Die Kopplungswindungen spannen auf der Statorseite eine teilzylindrische und auf der Rotorseite jeweils eine vollzylindrische Fläche auf. Sie sind zweckmäßig auf einem flexiblen Flachmaterialträger in Form von Leiterbahnen aufgedruckt. Die Flachmaterialträger umfassen zweckmäßig einen auf Massepotential liegenden Leiterbereich, der von den Kopplungswindungen 80',80",82',82" umschlossen ist. Die auf den Außenseiten der Kernschenkel 72',72",74',74" angeordneten Kopplungswindungen sind gegenüber dem Feld der Energiewicklungen 76,78 durch die Kernschenkel abgeschirmt, so dass die Gefahr von induzierten Störsignalen weitgehend eliminiert ist. Hinzu kommt, dass die Kopplungswindungen in ihrem Spaltraum zwischen den Kernschenkeln 72',72",74',74" und dem zugehörigen Gehäuse 34,70 gegen die Einwirkung abrassiver Teilchenströme geschützt sind. Eine weitere Verbesserung in dieser Hinsicht wird dadurch erzielt, dass die Kopplungswindungen und die Energiewicklung in eine geeignete Gussmasse eingebettet sind.

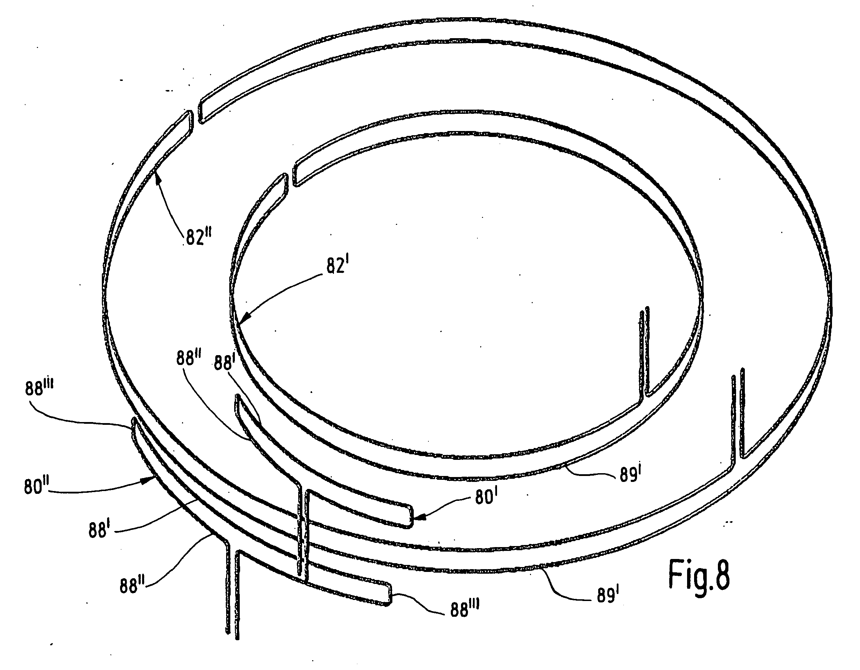

Der Aufbau der Datenübertragungsstrecken innerhalb des Drehübertragers ist besonders gut in Fig. 8 zu erkennen. Dort ist erkennbar, dass sich die Kopplungswindungen 80',80",82',82" paarweise mit den einander zugewandten Windungszweigen 88',89' gegenüberliegen und dass die statorseitigen Kopplungswindungen 80',80" eine teilzylindrische Fläche und die rotorseitigen Köpplungswindungen 82',82" eine vollzylindrische Fläche aufspannen.

Im Rahmen der Erfindung ist es als gleichwirkend anzusehen, wenn statt der teil- oder vollzylindrisch ausgebildeten Stator- und Rotorteile mit den zugehörigen Kempartien, Energiewicklungen und Kopplungsanordnungen solche in teil- oder vollkegeliger Bauart verwendet werden.

Zusammenfassend ist folgendes festzuhalten: Die Erfindung bezieht sich auf einen Drehübertrager beispielsweise für den Einsatz in Werkzeugmaschinen mit Verstellwerkzeugen. Der Drehübertrager umfasst ein Statorteil 18 und ein Rotorteil 26 mit je einer statorseitigen und einer rotorseitigen, an einander zugewandten Enden über einen Luftspalt voneinander getrennten Kempartie 72,74, mit je mindestens einer auf die statorseitige und die rotorseitige Kernpartie aufgewickelten Energiewicklung 76,78 für die Energieübertragung nach dem Transformatorprinzip, und mit einander paarweise zugeordneten stator- und rotorseitigen Kopplungswindungen 80',80",82',82" für die induktive Datenübertragung. Ziel der Erfindung ist die Entwicklung eines Drehübertragers, der vor einem unnötigen Verschleiß geschützt ist und einen relativ geringen Wartungsaufwand erfordert. Erfindungsgemäß wird zu diesem Zweck vorgeschlagen, dass das Statorteil 18 in einem Gehäuse 34 angeordnet ist, das aus einem Grundgehäuse 34' zur Aufnahme einer Sende- und Empfangselektronik mit Anschlusskabel sowie einem am Grundgehäuse 34' lösbar angeordneten Wechselgehäuse 34" zur Aufnahme der Energiewicklung 76 und der mindestens einen Kopplungswindung 80',80" zusammengesetzt ist. Bei Nichtgebrauch kann das Wechselgehäuse mit wenigen Handgriffen vollständig entfernt werden, wenn gemäß der Erfindung zwischen dem Grundgehäuse 34' und dem Wechselgehäuse 34" lösbare Steckkontakte 62 zur Herstellung von elektrischen Verbindungen angeordnet sind.

## Patentansprüche

1. Drehübertrager mit einem Statorteil (18) und einem Rotorteil (26), mit je einer statorseitigen und einer rotorseitigen, an einander zugewandten Enden über einen Luftspalt (35) voneinander getrennten Kempartie (72,74), mit je mindestens einer auf die statorseitige und die rotorseitige Kempartie aufgewickelten Energiewicklung (76,78) für die Energieübertragung nach dem Transformatorprinzip, und mit einander paarweise zugeordneten, stator- und rotorseitigen Kopplungswindungen (80',80", 82',82") für die induktive Datenübertragung, die an eine Sende- und/oder Empfangselektronik angeschlossen sind, **dadurch gekennzeichnet, dass** das Statorteil (18) in einem Gehäuse (34) angeordnet ist, das aus einem Grundgehäuse (34') zur Aufnahme einer Sende- und Empfangselektronik mit Anschlusskabel sowie einem am Grundgehäuse (34') lösbar angeordneten Wechselgehäuse (34") zur Aufnahme der Energiewicklung (76) und der mindestens einen Kopplungswindung (80',80") zusammengesetzt ist, und dass zwischen dem Grundgehäuse (34') und dem Wechselgehäuse (34") lösbare Steckkontakte (62) zur Herstellung von elektrischen Verbindungen angeordnet sind.

2. Drehübertrager nach Anspruch 1, **dadurch gekennzeichnet, dass** das Statorteil (18) in einem Gehäuse (34) angeordnet ist, das im Bereich der Energiewicklung (76) und der mindestens einen Kopplungswindung (80',80") zur Rotorseite hin unter Bildung eines Gehäusefensters (60) offen ist.

3. Drehübertrager nach Anspruch 2, **dadurch gekennzeichnet, dass** das Gehäusefenster (60) mit einem Deckel (64) dicht verschließbar ist, der vorzugsweise über ein Handhabungssystem (66) am Gehäuse (34) platzierbar und fixierbar ist.

4. Drehübertrager mit einem Statorteil (18) und einem Rotorteil (26), mit je einer statorseitigen und einer rotorseitigen, an einander zugewandten Enden über einen Luftspalt (35) voneinander getrennten Kempartie (72,74), mit je mindestens einer auf die statorseitige und die rotorseitige Kempartie aufgewickelten Energiewicklung (76,78) für die Energieübertragung nach dem Transformatorprinzip, und mit einander paarweise zugeordneten, stator- und rotorseitigen Kopplungswindungen (80',80", 82',82") für die induktive Datenübertragung, die an eine Sende- und/oder Empfangselektronik angeschlossen sind, **dadurch gekennzeichnet, dass** das Statorteil (18) in einem Gehäuse (34) angeordnet ist, das im Bereich der Energiewicklung (76) und der mindestens einen Kopplungswindung (80',80") zur Rotorseite hin unter Bildung eines Gehäusefensters (60) offen ist, und dass das Gehäusefenster (60) mit einem Deckel (64) dicht verschließbar ist, der vorzugsweise über ein Handhabungssystem (66) am Gehäuse (34) platzierbar und fixierbar ist.

5. Drehübertrager nach einem der Ansprüche 1 bis 4, **dadurch gekennzeichnet, dass** das Statorteil (18) mit seiner Kernpartie (72), der Energiewicklung (76) und der mindestens einen Kopplungswindung (80',80") sich über ein Zylindersegment erstreckt.

6. Drehübertrager nach einem der Ansprüche 1 bis 5, **dadurch gekennzeichnet, dass** das Rotorteil (26) mit seiner Kernpartie (74), der Energiewicklung (78) und der mindestens einen Kopplungswindung (82',82") sich über einen Vollzylinder erstreckt.

7. Drehübertrager nach einem der Ansprüche 1 bis 6, **dadurch gekennzeichnet, dass** die statorseitigen Kopplungswindungen (80',80") und/oder die Energiewicklung (76) zumindest an ihren rotornahen Windungszweigen (88') eine dielektrische Deckschicht tragen.

8. Drehübertrager nach Anspruch 7, **dadurch gekennzeichnet, dass** die Deckschicht mit einer Kennfarbe eingefärbt ist.

9. Drehübertrager nach Anspruch 8, **dadurch gekennzeichnet, dass** die Deckschicht eine Wandstärke < 1 mm, vorzugsweise < 0,5 mm aufweist.

10. Drehübertrager nach einem der Ansprüche 7 bis 9, **dadurch gekennzeichnet, dass** die Deckschicht aus einem Isolatormaterial besteht und dass eine Vorrichtung zur Überwachung der elektrischen Leitfähigkeit der Deckschicht vorgesehen ist.

11. Drehübertrager nach einem der Ansprüche 7 bis 10, **dadurch gekennzeichnet, dass** die mindestens eine Kopplungswindung (80',80",82', 82") und/oder die Energiewicklung (76,78) in einer zugleich die Deckschicht bildenden Gießmasse eingebettet sind.

12. Drehübertrager nach Anspruch 11, **dadurch gekennzeichnet, dass** die Gießmasse und/oder die Deckschicht ein abriebfestes Material enthält.

13. Drehübertrager nach Anspruch 12, **dadurch gekennzeichnet, dass** die Gießmasse aus einem mit Keramikteilchen gemischten Kunststoffmaterial besteht.

14. Werkzeugmaschine mit einem Maschinengestell (24), einer motorischantreibbaren Maschinenspindel (22) und einem an der Maschinenspindel lösbar angeordneten Werkzeugkopf (10), wobei das Maschinengestell (24) in Spindelnähe das Statorteil (18) und der Werkzeugkopf (10) das Rotorteil (26) des Drehübertragers nach einem der Ansprüche 1 bis 12 trägt.

15. Werkzeugmaschine nach Anspruch 14, **dadurch gekennzeichnet, dass** die rotorseitige Oberfläche des Statorteils (18) von einem spanabweisenden Fluid-Strom beaufschlagt ist.

16. Werkzeugmaschine nach Anspruch 14 oder 15, **gekennzeichnet durch** eine Handhabungsvorrichtung (66) zum Montieren oder Abnehmen zumindest eines Teils des Statorteils (16) am/vom Maschinengestell (24).

17. Werkzeugmaschine nach Anspruch 16 mit einem Werkzeugmagazin,
**dadurch gekennzeichnet, dass** das Werkzeugmagazin mindestens einen Platz für die Aufnahme des vom Maschinengestell abgenommenen Teils des Statorteils aufweist.

## Claims

1. Rotary transmitter having a stator part (18) and a rotor part (26), in each case having a stator-side and a rotor-side core part (72, 74), which are separated from one another at mutually facing ends via an air gap (35), in each case having at least one power winding (76, 78), which is wound on the stator-side core part and on the rotor-side core part, for power transmission on the basis of the transformer principle, and having stator-side and rotor-side coupling turns (80', 80" , 82', 82"), which are associated with one another in pairs, for inductive data transmission, which are connected to transmitting and/or receiving electronics, **characterized in that** the stator part (18) is arranged in a housing (34) which is composed of a basic housing (34') for holding transmitting and receiving electronics with a connecting cable and a replaceable housing (34 ") which is arranged detachably on the basic housing (34') for holding the power winding (76) and the at least one coupling turn (80', 80") and **in that** detachable plug contacts (62) for making electrical connections are arranged between the basic housing (34') and the replaceable housing (34") .

2. Rotary transmitter according to Claim 1, **characterized in that** the stator part (18) is arranged in a housing (34) which is open towards the rotor side in the area of the power winding (76) and of the at least one coupling turn (80', 80"), forming a housing window (60).

3. Rotary transmitter according to Claim 2, **characterized in that** the housing window (60) can be closed tight by a cover (64), which can be placed and fixed on the housing (34), preferably via a handling system (66).

4. Rotary transmitter having a stator part (18) and a rotor part (26), in each case having a stator-side and a rotor-side core part (72, 74), which are separated from one another at mutually facing ends via an air gap (35), in each case having at least one power winding (76, 78), which is wound on the stator-side core part and on the rotor-side core part, for power transmission on the basis of the transformer principle, and having stator-side and rotor-side coupling turns (80', 80" , 82', 82 "), which are associated with one another in pairs, for inductive data transmission, which are connected to transmitting and/or receiving electronics, **characterized in that** the stator part (18) is arranged in a housing (34) which is open towards the rotor side in the area of the power winding (76) and of the at least one coupling turn (80', 80"), forming a housing window (60), and **in that** the housing window (60) can be closed tight by a cover (64), which can be placed and fixed on the housing (34), preferably via a handling system (66).

5. Rotary transmitter according to one of Claims 1 to 4, **characterized in that** the stator part (18), with its core part (72), the power winding (76) and the at least one coupling turn (80', 80"), extends over a cylinder segment.

6. Rotary transmitter according to one of Claims 1 to 5, **characterized in that** the rotor part (26), with its core part (74), the power winding (78) and the at least one coupling turn (82', 82"), extends over a complete cylinder.

7. Rotary transmitter according to one of Claims 1 to 6, **characterized in that** the stator-side coupling turns (80', 80") and/or the power winding (76) are/is fitted with a dielectric covering layer, at least on its or their turn branches (88') close to the rotor.

8. Rotary transmitter according to Claim 7, **characterized in that** the covering layer is coloured with a characteristic colour.

9. Rotary transmitter according to Claim 8, **characterized in that** the covering layer has a wall thickness of < 1 mm, preferably of < 0.5 mm.

10. Rotary transmitter according to one of Claims 7 to 9, **characterized in that** the covering layer is composed of an insulator material, and **in that** an apparatus is provided for monitoring the electrical conductivity of the covering layer.

11. Rotary transmitter according to one of Claims 7 to 10, **characterized in that** the at least one coupling turn (80', 80" , 82', 82 ") and/or the power winding (76, 78) are/is embedded in a potting compound, which at the same time forms the covering layer.

12. Rotary transmitter according to Claim 11, **characterized in that** the potting compound and/or the covering layer contain or contains a wear-resistant material.

13. Rotary transmitter according to Claim 12, **characterized in that** the potting compound is composed of a plastic material mixed with ceramic particles.

14. Machine tool having a machine frame (24), a machine spindle (22) which can be driven by a motor or motors, and a tool head (10) which is arranged detachably on the machine spindle, wherein the machine frame (24) is fitted, close to the spindle, with the stator part (18), and the tool head (10) is fitted with the rotor part (26) of the rotary transmitter, according to one of Claims 1 to 12.

15. Machine tool according to Claim 14, **characterized in that** the rotor-side surface of the stator part (18) has a swarf-repellent fluid flow applied to it.

16. Machine tool according to Claim 14 or 15, **characterized by** a handling apparatus (66) for fitting or removing at least a part of the stator part (16) to/from the machine frame (24).

17. Machine tool according to Claim 16 having a tool magazine, **characterized in that** the tool magazine has at least one space for holding that part of the stator part which is detached from the machine frame.

## Revendications

1. Système de transmission de rotation comprenant une partie de stator (18) et une partie de rotor (26), ayant chacune une partie de noyau (72, 74) respective située du côté du stator et du côté du rotor, séparées l'une de l'autre à des extrémités en regard par un entrefer (35), comprenant à chaque fois au moins un enroulement de puissance (76, 78) enroulé sur la partie de noyau du côté du stator et du côté du rotor, pour le transfert d'énergie selon le principe du transformateur, et avec des enroulements de couplage (80', 80", 82', 82") associés par paire l'un à l'autre, du côté du stator et du côté du rotor, pour le transfert de données inductif, qui sont raccordés à une électronique de transmission et/ou de réception, **caractérisé en ce que** la partie de stator (18) est disposée dans un boîtier (34) qui est composé d'un boîtier de base (34') pour recevoir une électronique de transmission et de réception avec des câbles de raccordement, ainsi que d'un boîtier remplaçable (34") disposé de manière amovible sur le boîtier de base (34'), pour recevoir l'enroulement de puissance (76) et au moins un enroulement de couplage (80', 80"), et **en ce qu'**entre le boîtier de base (34') et le boîtier remplaçable (34") sont disposés des contacts enfichables amovibles (62) pour établir des connexions électriques.

2. Système de transmission de rotation selon la revendication 1, **caractérisé en ce que** la partie de stator (18) est disposée dans un boîtier (34), qui est ouvert dans la région de l'enroulement de puissance (76) et de l'au moins un enroulement de couplage (80', 80") vers le côté du rotor en formant une fenêtre (60) pour le boîtier.

3. Système de transmission de rotation selon la revendication 2, **caractérisé en ce que** la fenêtre (60) pour le boîtier peut être fermée hermétiquement par un couvercle (64) qui peut être placé et fixé de préférence par le biais d'un système de manipulation (66) sur le boîtier (34).

4. Système de transmission de rotation comprenant une partie de stator (18) et une partie de rotor (26), ayant chacune une partie de noyau (72, 74) respective située du côté du stator et du côté du rotor, séparées l'une de l'autre à des extrémités en regard par un entrefer (35), comprenant à chaque fois au moins un enroulement de puissance (76, 78) enroulé sur la partie de noyau du côté du stator et du côté du rotor, pour le transfert d'énergie selon le principe du transformateur, et avec des enroulements de couplage (80', 80", 82', 82") associés par paire l'un à l'autre, du côté du stator et du côté du rotor, pour le transfert de données inductif, qui sont raccordés à une électronique de transmission et/ou de réception, **caractérisé en ce que** la partie de stator (18) est disposée dans un boîtier (34) qui est ouvert dans la région de l'enroulement de puissance (76) et de l'au moins un enroulement de couplage (80', 80") vers le côté du rotor en formant une fenêtre (60) pour le boîtier, et **en ce que** la fenêtre (60) pour le boîtier peut être fermée hermétiquement par un couvercle (64) qui peut être placé et fixé de préférence par le biais d'un système de manipulation (66) sur le boîtier (34).

5. Système de transmission de rotation selon l'une quelconque des revendications 1 à 4, **caractérisé en ce que** la partie de stator (18) s'étend avec sa partie de noyau (72), l'enroulement de puissance (76) et l'au moins un enroulement de couplage (80', 80") sur un segment de cylindre.

6. Système de transmission de rotation selon l'une quelconque des revendications 1 à 5, **caractérisé en ce que** la partie de rotor (26) s'étend avec sa partie de noyau (74), l'enroulement de puissance (78) et l'au moins un enroulement de couplage (82', 82") sur un cylindre massif.

7. Système de transmission de rotation selon l'une quelconque des revendications 1 à 6, **caractérisé en ce que** les enroulements de couplage (80', 80") du côté du stator et/ou l'enroulement de puissance (76) porte au moins au niveau de leurs branches d'enroulement (88') proches du rotor une couche de revêtement diélectrique.

8. Système de transmission de rotation selon la revendication 7, **caractérisé en ce que** la couche de revêtement est colorée avec une couleur caractéristique.

9. Système de transmission de rotation selon la revendication 8, **caractérisé en ce que** la couche de revêtement a une épaisseur < 1 mm, de préférence < 0,5 mm.

10. Système de transmission de rotation selon l'une quelconque des revendications 7 à 9, **caractérisé en ce que** la couche de revêtement se compose d'un matériau isolant et **en ce qu'**il est prévu un dispositif de surveillance de la conductibilité électrique de la couche de revêtement.

11. Système de transmission de rotation selon l'une quelconque des revendications 7 à 10, **caractérisé en ce que** l'au moins un enroulement de couplage (80', 80", 82', 82") et/ou l'enroulement de puissance (76, 78) sont noyés dans une composition coulée formant en même temps la couche de revêtement.

12. Système de transmission de rotation selon la revendication 11, **caractérisé en ce que** la composition coulée et/ou la couche de revêtement contien(nen)t un matériau résistant à l'usure.

13. Système de transmission de rotation selon la revendication 12, **caractérisé en ce que** la composition coulée se compose d'un matériau en plastique mélangé avec des particules céramiques.

14. Machine-outil comprenant un bâti de machine (24), une broche de machine (22) pouvant être entraînée par un moteur, et une tête d'outil (10) disposée de manière amovible sur la broche de la machine, le bâti de machine (24) portant à proximité de la broche la partie de stator (18) et la tête d'outil (10) portant la partie de rotor (26) du système de transmission de rotation selon l'une quelconque des revendications 1 à 12.

15. Machine-outil selon la revendication 14, **caractérisée en ce que** la surface de la partie du stator (18) du côté du rotor est sollicitée par un courant de fluide enlevant les copeaux.

16. Machine-outil selon la revendication 14 ou 15, **caractérisée par** un dispositif de manipulation (66) pour le montage ou le démontage d'au moins une partie de la partie de stator (16) sur ou depuis le bâti de machine (24).

17. Machine-outil selon la revendication 16, comprenant un magasin d'outil, **caractérisée en ce que** le magasin d'outil présente au moins une place pour recevoir la partie de la partie de stator reçue par le bâti de machine.
